Europäisches Patentamt

(19) European Patent Office

Office européen des brevets

(11) Numéro de publication : **0 267 848 B1**

(12) **FASCICULE DE BREVET EUROPEEN**

(45) Date de publication du fascicule du brevet :
05.06.91 Bulletin 91/23

(51) Int. Cl.⁵ : **G02B 5/08, F21V 7/22**

(21) Numéro de dépôt : **87402516.6**

(22) Date de dépôt : **06.11.87**

(54) **Réflecteurs optiques, procédé de fabrication et compositions plastiques pour la mise en oeuvre du procédé.**

(30) Priorité : **07.11.86 FR 8615599**

(43) Date de publication de la demande :
**18.05.88 Bulletin 88/20**

(45) Mention de la délivrance du brevet :
**05.06.91 Bulletin 91/23**

(84) Etats contractants désignés :
**DE ES FR GB IT**

(56) Documents cités :
**EP-A- 0 121 457**
**EP-A- 0 197 830**
**GB-A- 1 434 920**
**GB-A- 2 017 127**

(73) Titulaire : **VALEO VISION**
**17, rue Henri Gautier**
**F-93012 Bobigny Cédex (FR)**

(72) Inventeur : **Pilache, Michel**
**15 allée des Saules**
**F-95250 Beauchamp (FR)**
Inventeur : **Lopez, André**
**5 La Vallée aux Cerfs Mortefontaine en Thelle**
**F-60570 Endeville (FR)**
Inventeur : **Baciu, Antoine**
**5 Clos d'Orléans**
**F-27940 Anbevoye (FR)**
Inventeur : **Launay, Jean-Claude**
**4 Place du Rhin**
**F-95150 Taverny (FR)**

(74) Mandataire : **Martin, Jean-Jacques et al**
**Cabinet REGIMBEAU 26, Avenue Kléber**
**F-75116 Paris (FR)**

EP 0 267 848 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

la présente invention concerne des réflecteurs optiques, un procédé de fabrication de ces réflecteurs ainsi que des compositions thermoplastiques pour la mise en oeuvre dudit procédé.

Les réflecteurs optiques et notamment ceux destinés à équiper les projecteurs des véhicules automobiles doivent répondre à des critères précis tant au niveau des caractéristiques mécaniques, qu'au niveau des caractéristiques thermiques et optiques. Ainsi, ces réflecteurs doivent avoir une bonne tenue mécanique, et ils ne doivent pas se déformer sous l'action de la chaleur dégagée par l'ampoule.

Il est bien connu d'utiliser des résines thermodurcissables chargées et renforcées pour la fabrication de réflecteurs optiques. Les réflecteurs obtenus à partir de ce type de résines présentent des caractéristiques satisfaisantes, en particulier, de bonnes propriétés thermomécaniques.

De même, on connaît l'utilisation de résines thermoplastiques, telles que le polyamide 6,6 ou le polybutylène téréphtalate, sous forme d'éléments "bi-matière".

Dans le cadre de la présente invention, on désignera par "bi-matière" aussi bien des éléments bicouches que des éléments tricouches. On entend par élément "bi-matière" bicouche un élément comprenant une couche support renforcée présentant une bonne tenue mécanique et revêtue sur une seule face d'une couche superficielle de bon état de surface destinée à recevoir un dépôt d'aluminium. Ce type d'éléments bicouches peut par exemple être obtenu par une première injection de la couche support dans la matrice d'un moule qui est ensuite déplacé en regard d'une buse d'injection amenant la matière de la couche superficielle au contact de la couche support. Avantageusement l'injection de la seconde couche superficielle est effectuée lorsque la première couche support n'est pas encore entièrement figée.

Le document EP-A-0197 830 illustre un procédé de moulage bi-matière permettant la fabrication d'un réflecteur optique selon la présente invention.

Les éléments "bi-matière" tricouches sont constitués par une couche support ou couche de coeur revêtue sur chacune de ses faces par une couche superficielle. Ils sont obtenus par l'injection dans un moule d'un premier matériau, puis d'un second qui repousse le premier à la périphérie du moule de façon à former une couche superficielle ou peau. Le document DE-A- 2 425 627 illustre un procédé de ce type. Les réflecteurs obtenus grâce à ce genre de procédé peuvent recevoir directement une couche d'aluminium, sans qu'il soit nécessaire d'appliquer une couche additionnelle de vernis. Mais l'utilisation de résines thermoplastiques, telles que le polyamide 6,6 ou le téréphtalate, est d'un coût beaucoup trop élevé pour les utiliser comme matière de base dans la fabrication en grande série de pièces, telles que les réflecteurs de véhicules automobiles.

On sait par ailleurs que le polypropylène est une matière plastique très bon marché, qui présente en outre une bonne tenue thermique, et en particulier une température de fléchissement sous charge relativement élevée.

Cependant, le polypropylène présente un coefficient de dilatation relativement élevé, et son utilisation comme matériau de couche superficielle pour des réflecteurs donne des résultats très médiocres et notamment présente une adhérence pratiquement nulle vis-à-vis de l'aluminium.

L'homme de métier était donc dissuadé d'employer le polypropylène pour la réalisation de réflecteurs, bien qu'il existe des traitements de surface classiques qui permettent de modifier les propriétés de surface du polypropylène. En effet, de tels traitements, tels qu'une décharge couronne ou un flammage, ne sont pas durables et l'aluminium déposé se détache trop rapidement.

La présente invention a pour but de remédier aux inconvénients précités en proposant des réflecteurs optiques de faible coût, ayant des caractéristiques mécaniques, thermiques et optiques tout à fait satisfaisantes, ainsi qu'un procédé pour la réalisation de ces réflecteurs, dont la mise en oeuvre est simple et économique.

Selon un premier objet, l'invention concerne un réflecteur optique, du type comportant une couche support, une couche superficielle et une couche réfléchissante caractérisé en ce que le matériau de couche superficielle et le matériau de couche support sont obtenus respectivement à partir des compositions (I) et (II) mentionnées ci-après, dans lesquelles les pourcentages sont généralement exprimés en poids par rapport au poids total de la composition :

### Composition (I)

| | |
|---|---|
| polypropylène | 50 à 100% |
| polymère polaire | 0 à 35% |
| agent de compatibilisation | 0 à 15% |

Composition (II)

| polypropylène | 45 à 70% |
|---|---|
| charges minérales pulvérulentes | 15 à 50% |
| charges fibreuses | 5 à 15% |
| agent de couplage | 0,5 à2% |

De manière surprenante, un tel réflecteur selon l'invention présente une bonne stabilité dimensionnelle et une bonne stabilité thermique pendant l'allumage de la lampe placée en son foyer.

Grâce à l'invention, la couche d'aluminium qui constitue la surface réfléchissante du réflecteur peut être déposée directement sur la surface du corps moulé après un traitement de surface, sans qu'il soit nécessaire d'appliquer une couche de vernis. Dans le cas où la composition (I) de la couche superficielle est exclusivement constituée par du polypropylène ou éventuellement par un mélange de polypropylène et d'une charge de pigmentation, on aura de préférence recours à un traitement de surface au moyen d'un plasma avantageusement obtenu par excitation micro-ondes d'un mélange oxygène-azote, par exemple dans une proportion volumique (25-75), sous pression réduite, par exemple à une pression inférieure ou égale à 1 mbar. Lorsqu'une charge de pigmentation est utilisée, elle sera présente jusqu'à environ 15% du poids total de la composition (I).

De manière avantageuse, le matériau de peau peut être réalisé à partir de la composition suivante (COMPOSITION I) exprimé en pourcentages pondéraux :

| Polypropylène | 50 à 80% |
|---|---|
| Polymère polaire | 15 à 35% |
| Agent de compatibilisation | 5 à 15% |

Une telle composition facilite l'accrochage de l'aluminium grâce à la création de liaisons polaires en surface du matériau de couche superficielle et grâce à la création de réseaux interpénétrés entre le polypropylène et le polymère polaire, analogues à des alliages, obtenus par utilisation d'un agent de compatibilisation.

Selon un second objet, l'invention concerne un procédé de réalisation de réflecteurs optiques, selon lequel on injecte en deux temps dans un moule, un matériau de couche support et un matériau de couche superficielle.

Selon un mode de mise en oeuvre particulier d'un tel procédé, on injecte dans un moule, un premier matériau, puis un second matériau qui repousse le premier vers la périphérie du moule de façon à former une peau. Ces procédés sont caractérisés en ce que les deux matériaux possèdent les compositions (I) et (II) décrites précédemment.

Selon un troisième objet, l'invention concerne un procédé de traitement de la surface du corps de réflecteur ayant la composition ci-dessus destiné à améliorer "l'accrochage" de la couche d'aluminium sur celle-ci.

Le procédé selon l'invention est caractérisé en ce qu'il consiste à traiter la surface du corps de réflecteur par des espèces gazeuses activées, générées dans un plasma.

De préférence, le plasma est obtenu par excitation micro-ondes d'un mélange oxygène-azote sous pression réduite.

Un tel procédé est particulièrement bien adapté à l'aluminage d'un corps de réflecteur réalisé par moulage des compositions selon l'invention, en particulier dans le cas où la composition (I) est exempte de polymère polaire et d'agent de compatibilisation.

D'autres avantages et caractéristiques de l'invention apparaîtront au cours de la description détaillée faite ci-après en s'appuyant notamment sur des exemples de réalisation et de mise en oeuvre donnés à simple titre d'illustration.

Selon une variante d'exécution, la présente invention propose de créer, dans la couche superficielle ou couche de peau, des réseaux interpénétrés entre le polypropylène et le polymère polaire, analogue à des alliages.

Un tel résultat est atteint grâce à l'utilisation d'un agent de compatibilisation. On entend par agent de compatibilisation un agent chimique favorisant l'interpénétration des deux réseaux polymères en présence. De par sa structure biphasée, un tel agent de compatibilisation présente des domaines plus ou moins compatibles avec chacun des deux polymères, ce qui permet d'assurer la stabilisation de l'enchevêtrement obtenu au cours du mélangeage. Il s'agit entre autres de copolymères séquencés ABA contenant un motif central élastomère B qui est un diène conjugué, et des motifs terminaux A composés de préférence d'un vinyl-arène, tel que le styrène. Il s'agit par exemple de composés tels que le KRATON D® (styrène/butadiène/styrène ou styrène/isoprène/styrène), le KRATON G® (styrène/éthylène-butylène/styrène) de Shell. Toutefois, le PEBAX® d'Atochem (polyétherblocamide), le LOTADER® de CdF Chimie (éthylène-ester acrylique anhydride maléique) conviennent aussi.

Les polymères polaires ont été avantageusement choisis dans le groupe formé par le polybutylène téréphtalate (PBT), les polyamides en particulier le polyamide 6 (PA6), le polyamide 6,6 (PA6,6), le polycarbonate (PC), le polystyrène (PS) et leurs mélanges.

Conformément à la présente invention, la composition suivante est destinée à former le matériau de couche superficielle des réflecteurs optiques (% en poids) :

Polypropylène ..................................................... 50 à 80%,

Polymère polaire ...................................... 15 à 35%,

Agent de compatibilisation ......................... 5 à 15%

Le polypropylène et le polymère polaire utilisés peuvent être de n'importe quel type courant, et sont donc disponibles sur le marché.

Dans la pratique, tant pour des impératifs techniques qu'économiques, le polymère polaire sera avantageusement utilisé avec une teneur maximale d'environ 35% dans le cas d'un polycarbonate et d'environ 25% dans le cas d'autres types de polymères polaires.

Dans la pratique, avec la composition du type suivant (% en poids) :

Polypropylène ..................................... 60%

Polycarbonate ..................................... 30%

KRATON G® ....................................... 10%,

on obtient des matériaux dont la surface, après effluvage et dépôt d'aluminium sous vide présentent des coefficients de réflexion de la lumière voisins de 85%, c'est-à-dire voisins des meilleurs coefficients observés avec des matériaux témoins en polybutylène téréphtalate.

De surcroît, on ne constate aucun décollement de l'aluminium après un séjour de 72 heures à 60°C ni après un mois de stockage à l'air ambiant.

A titre d'exemple particulier de mise en oeuvre de la présente invention, on indique ci-après un mode d'obtention d'un matériau de couche superficielle à partir de la composition suivante, sous forme de granulés, (% en poids)

Polypropylène "Hostalen PPU 1780" ............ 60%

Polycarbonate "Lexan LS2-111" ..................... 30%

Kraton G 1652® ............................................... 10%

Le mélange des granulés est effectué dans un mélangeur à pales Lodige de 50 litres pendant 5 minutes, puis est étuvé pendant 3 heures à 100°C.

Ce mélange est ensuite "compoundé" dans une extrudeuse Fairex, Les conditions opératoires sont les suivantes :

Température du fourreau : 250-260°C

Vitesse de rotation de la vis : 60 rotations/minute

Ampérage consommé : 2A

Le jonc issu de la filière est refroidi à l'eau puis granulé.

Le matériau de couche support des réflecteurs optiques selon l'invention a pour fonction de leur conférer une bonne rigidité et de bonnes propriétés mécaniques. Le matériau de couche support doit ainsi présenter, entre autre, un coefficient de dilatation faible et une résistance thermique élevée. Afin d'obtenir une bonne rigidité, il est souhaitable d'incorporer à la composition des charges pulvérulentes et/ou fibreuses qui doivent être intimement liées au polymère.

Les charges minérales pulvérulentes peuvent être du talc, du mica, des carbonates, des kaolins, des billes de verre. Les charges fibreuses peuvent être constituées par des fibres de verre.

Un agent de couplage destiné à assurer la cohésion entre les charges et le polymère est en outre ajouté; il peut consister en un silane, tel que l'Ucarsil A® et/ou l'Ucarsil B® commercialisé par Union Carbide.

Conformément à la présente invention, la composition suivante pourra être destinée à former le matériau de couche support des réflecteurs optiques (pourcentage en poids) :

Polypropylène ................................ 45 à 70%

charges minérales pulvérulentes. 15 à 50%

charges fibreuses .......................... 5 à 15%

Agent de couplage ...................... 0,5 à 2%.

Le Tableau I suivant montre l'importance de l'addition d'agent de couplage sur une composition comportant 70% de polypropylène et 30% de mica :

## Tableau I

| polypropylène % | Mica % | Agent de couplage | Température de fléchissement °C |
|---|---|---|---|
| 70 | 30 | - | 93 |
| 70 | 30 | + | 103 |

(+) = l'agent de couplage a été ajouté à hauteur de 1% en poids de la charge de mica.

Le tableau II suivant montre l'influence du rapport charge pulvérulente/fibres de verre sur le retrait au moulage et le coefficient de dilatation linéaire (mélanges sans agent de couplage).

## Tableau II

| Polypropylène % | Talc % | Fibre de verre | Retrait en longueur % | Retrait en largeur % | Dilatation $10^{-5}{}^{\circ}C$ |
|---|---|---|---|---|---|
| 70 | 25 | 5 | 1,2 | 1,45 | 9,0 |
| 70 | 20 | 10 | 1,15 | 1,65 | 7,9 |
| 70 | 15 | 15 | 1,7 | 2,05 | 6,4 |

Dans la pratique, la composition suivante conduit à d'excellents résultats :

| | |
|---|---|
| Polypropylène .......................... | 48% |
| Talc ...................................... | 40% |
| Fibres de verre ..................... | 10% |
| Ucarsil A® .................... | 0,75% |
| Ucarsil B® .................... | 0,25% |
| + stabilisants. | |

Caractéristiques =  température de fléchissement sous charge : 117°C
Retraits en longueur = 0,8%
Retraits en largeur = 1,15%
Coefficient de dilatation linéaire = $4,6 \cdot 10^{-5}{}^{\circ}C$

A titre d'exemple particulier de mise en oeuvre de la présente invention, on indique ci-après un mode d'obtention d'un matériau de couche support à partir de la composition suivante (% en poids) :

| | |
|---|---|
| Polypropylène Hostalen PPU 1780 .............................. | 49,05% |
| Talc de Luzenac PE 8520 ........................................ | 39,25% |
| Fibres de verre Vétrotex EC 1751 20x1 ................. | 9,80% |
| Ucarsil PC IA® ......................................... | 1,5 % |
| Ucarsil PC IB® ......................................... | 0,4 % |

On prépare une solution d'ensimage à raison de 5% en poids de solution par rapport à la charge de polypropylène. Cette solution comprend les proportions d'Ucarsil®, de l'alcool éthylique et de l'eau dans une proportion alcool/eau de 95 pour 5 en volume.

On place les charges (talc et fibres) dans un Lodige de 50 litres et on met en rotation pendant 2 minutes. Sans arrêter le Lodige, on introduit la solution d'ensimage par petites rasades et on poursuit la rotation

EP 0 267 848 B1

pendant 5 minutes.

On ajoute le polypropylène et on poursuit la rotation pendant 10 minutes. On évapore les solvants dans une étuve à 100°C pendant 1 heure. Le mélange est "compoundé" dans une extrudeuse Fairex. Les conditions opératoires sont les suivantes :

Température du fourreau : 220-230°C

Vitesse de rotation de la vis : 60 rotations/minute

Ampérage consommé : 6A

A la sortie de la filière, le jonc est refroidi à l'eau et granulé.

En outre, à titre d'exemple d'une autre variante intéressante de l'objet de l'invention, on réalise un réflecteur par moulage par injection en deux temps et en utilisant comme matériaux de couche superficielle, du polypropylène sous forme d'homopolymère ou de copolymère.

Le traitement de surface est réalisé dans une enceinte mise sous dépression (≤ 1 mbar), et contenant un mélange gazeux oxygène-azote en proportion 25/75. Le mélange gazeux est excité par micro-ondes, pendant un court instant (≤ 2 minutes). Les espèces activées générées dans le plasma, qui rentrent en contact avec le support en polypropylène, créent la modification de surface attendue.

Après aluminage sous vide, l'échantillon présente des coefficients de réflexion de l'ordre de 85%. On ne constate aucune perte d'adhérence après 72 heures à 80°C ni après plusieurs mois de stockage à température ambiante.

Enfin, on indiquera dans le tableau ci-après les différentes cotes d'adhérence du film d'aluminium pour différentes compositions de couche superficielle, ayant subi différents traitements de surface. Ces résultats démontrent de façon claire l'intérêt décisif de l'objet de la présente invention.

7

EP 0 267 848 B1

## Cote d'adhérence du film d'aluminium
## selon norme de scarification
## NF T30 - 038 ou ISO 2409

| Composition de la couche superficielle | | Aluminage sans traitement de surface | Aluminage après traitement de surface classique * | Aluminage après traitement par plasma micro-ondes** |
|---|---|---|---|---|
| Polypropylène | état initial | 0 | 10 | 10 |
| Polypropylène | après vieillis-sement | 0 | 0 | 10 |
| Polypropylène 60% | état initial | 8 | 10 | 10 |
| Polycarbonate 30% Kraton G$^R$ 10% | après vieillis-sement | 5 | 10 | 10 |

\*   traitement de surface classique par décharge couronne ou flammage

\*\* traitement de surface par un plasma obtenu par excitation micro-ondes d'un mélange oxygène-azote (25/75) dans une enceinte sous pression réduite de 1 mbar

## Revendications

1. Réflecteur optique, du type comportant une couche support, une couche superficielle et une couche réfléchissante, caractérisé en ce que le matériau de couche superficielle et le matériau de couche support sont obtenus respectivement à partir des compositions (I) et (II) ci-après, dans lesquelles les pourcentages sont principalement exprimés en poids par rapport au poids total de la composition :

8

Composition (I)

|  |  |  |  |
|---|---|---|---|
| polypropylène | ............................................ | 50 à | 100% |
| polymère polaire | ..................................... | 0 à | 35% |
| agent de compatibilisation | ...................... | 0 à | 15% |

Composition (II)

|  |  |  |  |
|---|---|---|---|
| polypropylène | ........................................... | 45 à | 70% |
| charges minérales pulvérulentes | ............. | 15 à | 30% |
| charges fibreuses | ..................................... | 5 à | 15% |
| agent de couplage | ................................... | 0,5 à | 2%. |

2. Réflecteur optique selon la revendication 1, caractérisé en ce que la composition (I) est constituée de (% en poids) :

|  |  |  |  |
|---|---|---|---|
| polypropylène | ............................................ | 50 à | 80% |
| polymère polaire | ..................................... | 15 à | 35% |
| agent de compatibilisation | ...................... | 5 à | 15% |

3. Réflecteur optique selon la revendication 1, caractérisé en ce que la composition (I) est constituée de (% en poids) :

|  |  |  |
|---|---|---|
| polypropylène | ............................................ | 60% |
| polymère polaire | ..................................... | 30% |
| agent de compatibilisation | ...................... | 10%. |

4. Réflecteur optique selon l'une des revendications 1 à 3, caractérisé en ce que la composition (II) est constituée de (% en poids) :

|  |  |
|---|---|
| polypropylène | 49,05% |
| charges minérales pulvérulentes | 39,25% |
| charges fibreuses | 9,80% |
| Ucarsil PC 1A ® | 1,5 % |
| Ucarsil PC 1B ® | 0,4 % |

5. Réflecteur optique selon l'une des revendications 1 à 4, caractérisé en ce que le polymère polaire est choisi dans le groupe constitué par le polybutylène téréphtalate, les polyamides en particulier le polyamide 6, le polyamide 6,6, le polycarbonate, le polystyrène et leur ; mélanges.

6. Réflecteur optique selon l'une des revendications 1 à 5, caractérisé en ce que l'agent de compatibilisation est un copolymère choisi dans le groupe formé par le Kraton D®, le Kraton G®, le Pebax® et le Lotader®.

7. Réflecteur optique selon l'une des revendications 1 à 6, caractérisé en ce que l'agent de couplage est un silane.

8. Réflecteur optique selon l'une des revendications 1 à 7, caractérisé en ce que les charges minérales pulvérulentes sont choisies dans le groupe formé par le talc, le mica, les carbonates, les kaolins, les billes de verre.

9. Réflecteur optique selon l'une des revendications 1 à 8, caractérisé en ce qu'à titre de charges fibreuses on utilise des fibres de verre.

10. Procédé de fabrication de réflecteurs optiques conformes à l'une des revendications 1 à 9, consistant

9. Optischer Reflektor nach einem der Ansprüche 1 bis 8, **dadurch gekennzeichnet**, daß man als Faser-ficielle, caractérisé en ce que ces matériaux présentent des compositions conformes à celles mentionnées à l'une des revendications 1 à 9, et en ce que, le cas échéant, on soumet le corps du réflecteur à un traitement de surface.

11. Procédé selon la revendication 10, caractérisé en ce que, lorsque la composition de la couche superficielle est constituée exclusivement par du polypropylène pouvant éventuellement contenir jusqu'à 15% en poids d'une charge de pigmentation, le traitement de surface est réalisé par un plasma obtenu par excitation micro-ondes d'un mélange oxygène-azote, sous pression réduite.

**Ansprüche**

1. Optischer Reflektor von der Art, die eine Trägerschicht, eine Oberflächenschicht und eine Reflexionsschicht enthält, **dadurch gekennzeichnet**, daß das Material der Oberflächenschicht und das Material der Trägerschicht jeweils aus den nachstehenden Zusammensetzungen (I) und (II) hergestellt sind, wobei die genannten Prozentsätze hauptsächlich in Gewichtsanteilen im Verhältnis zum Gesamtgewicht der Zusammen-setzung ausgedrückt sind :

```
Zusammensetzung (I)
Polypropylen ......................... 50 bis 100 %
Polares Polymer ......................  0 bis  35 %
Kompatibilitätsmittel ................  0 bis  15 %
```

```
Zusammensetzung (II)
Polypropylen ......................... 45 bis 70 %
Pulverförmige mineralische Füllstoffe 15 bis 50 %
Faserfüllstoffe ......................  5 bis 15 %
Haftvermittler ...................... 0,5 bis  2 %
```

2. Optischer Reflektor nach Anspruch 1, **dadurch gekennzeichnet**, daß die Zusammensetzung (I) wie folgt beschaffen ist (Gew.-%) :

```
Polypropylen ......................... 50 bis 80 %
Polares Polymer ...................... 15 bis 35 %
Kompatibilitätsmittel ................  5 bis 15 %
```

3. Optischer Reflektor nach Anspruch 1, **dadurch gekennzeichnet**, daß die Zusammensetzung (I) wie folgt beschaffen ist (Gew.-%) :

```
Polypropylen ......................... 60 %
Polares Polymer ...................... 30 %
Kompatibilitätsmittel ................ 10 %
```

4. Optischer Reflektor nach einem der Ansprüche 1 bis 3, **dadurch gekennzeichnet**, daß die Zusammensetzung (II) wie folgt beschaffen ist (Gew. -%) :

```
Polypropylen ......................... 49,05 %
Pulverförmige mineralische Füllstoffe   39,25 %
Faserfüllstoffe ...................... 9,80 %
Ucarsil PC 1A(R) ..................... 1,5  %
Ucarsil PC 1B(R) ..................... 0,4  %
```

5. Optischer Reflektor nach einem der Ansprüche 1 bis 4, **dadurch gekennzeichnet**, daß das polare Polymer aus der Gruppe ausgewählt wird, die Polybutylenterephthalat, Polyamide, insbesondere Polyamid 6, Polyamid 6,6, Polycarbonat, Polystyrol und deren Mischungen umfaßt.

6. Optischer Reflektor nach einem der Ansprüche 1 bis 5, **dadurch gekennzeichnet,** daß das Kompatibilitätsmittel ein Copolymer ist, das aus der Gruppe ausgewählt wurde, die Kraton D®, Kraton G®, Pebax® und Lotader® umfaßt.

7. Optischer Reflektor nach einem der Ansprüche 1 bis 6, **dadurch gekennzeichnet**, daß es sich bei dem Haftvermittler um ein Silan handelt.

8. Optischer Reflektor nach einem der Ansprüche 1 bis 7, **dadurch gekennzeichnet,** daß die pulverförmigen mineralischen Füllstoffe aus der Gruppe ausgewählt werden, die Talk, Glimmer, Carbonate, Kaoline, Glaskugeln umfaßt.

9. Optischer Reflektor nach einem der Ansprüche 1 bis 8, **dadurch gekennzeichnet,** daß man als Faserfüllstoffe Glasfasern verwendet.

10. Verfahren zur Herstellung von optischen Reflektoren entsprechend einem der Ansprüche 1 bis 9, wobei das Material der Trägerschicht und das Material der Oberflächenschicht in zwei Arbeitsgängen in eine Form eingespritzt wird, **dadurch gekennzeichnet**, daß diese Materialien Zusammensetzungen aufweisen, die denen entsprechen, welche in einem der Ansprüche 1 bis 9 aufgeführt sind, und daß man den Reflektorkörper nötigenfalls einer Oberflächenbehandlung unterzieht.

11. Verfahren nach Anspruch 10, **dadurch gekennzeichnet,** daß die Oberflächenbehandlung, wenn die Oberflächenschicht ausschließlich aus Polypropylen besteht, welches eventuell bis zu 15 Gew.-% eines Pigmentierungsfüllstoffs enthalten kann, mit Hilfe eines Plasmas vonstattengeht, welches durch Mikrowellenerregung eines Sauerstoff-Stickstoff-Gemischs unter reduziertem Druck erzeugt wird.

## Claims

1. An optical reflector, of the kind comprising a support layer, a surface layer and a reflective layer, characterised in that the material of the surface layer and the material of the support layer are obtained respectively from compositions I and II below, in which the percentages are mainly expressed in terms of weight as a proportion of the total weight of the composition :

Composition I

```
polypropylene ................... 50 to 100%
polar polymer ................... 0 to 35%
compatibility agent ............. 0 to 15%
```

Composition II

```
polypropylene ................... 45 to 70%
granular mineral material ....... 15 to 50%
fibrous material ................ 5 to 15%
coupling agent .................. 0.5 to 2%
```

2. An optical reflector according to Claim 1, characterised in that Composition I comprises (in % by weight):

```
polypropylene ................... 50 to 80%
polar polymer ................... 15 to 35%
compatibility agent ............. 5 to 15%
```

3. An optical reflector according to Claim 1, characterised in that Composition I comprises (in % by weight):

```
polypropylene ................... 60%
polar polymer ................... 30%
compatibility agent ............. 10%
```

4. An optical reflector according to one of Claims 1 to 3, characterised in that Composition II comprises (in % by weight) :

```
polypropylene ................... 49.05%
granular mineral material ....... 39.25%
fibrous material ................ 9.80%
Ucarsil PC 1A ® ................. 1.5%
Ucarsil PC 1B ® ................. 0.4%
```

5. An optical reflector according to one of Claims 1 to 4, characterised in that the polar polymer is selected from the group comprising polybutylene terephthalate, polyamides, in particular polyamide 6, polyamide 6,6, polycarbonate, polystyrene and mixtures of the foregoing.

6. An optical reflector according to one of Claims 1 to 5, characterised in that the compatibility agent is a copolymer selected from the group comprising Kraton D®, Kraton G®, Pebax® and Lotader®

7. An optical reflector according to one of Claims 1 to 6, characterised in that the coupling agent is a silane.

8. An optical reflector according to one of Claims 1 to 7, characterised in that the granular mineral materials are selected from the group comprising talc, mica, carbonates, kaolins, and glass balls.

9. An optical reflector according to one of Claims 1 to 8, characterised in that glass fibres are used as the fibrous material.

10. A method of making optical reflectors in accordance with one of Claims 1 to 9, comprising injecting into a mould, non-simultaneously, the material of the support layer and the material of the surface layer, characterised in that the said materials are of compositions in accordance with those defined in one of Claims 1 to 9, and in that the body of the reflector is, if necessary, subjected to surface treatment.

11. A method according to Claim 10, characterised in that, when the composition of the surface layer comprises exclusively polypropylene which may optionally contain up to 15% by weight of pigmentation material, the surface treatment is carried out by means of a plasma obtained by microwave excitation of a mixture of oxygen and nitrogen, under reduced pressure.